# EUROPÄISCHE PATENTSCHRIFT

(11) **EP 0 576 996 B1**
(45) Veröffentlichungstag und Bekanntmachung des Hinweises auf die Patenterteilung: **12.02.1997**
(21) Anmeldenummer: 93110056.4
(22) Anmeldetag: 24.06.1993
(51) Int. Cl.: C09B 5/48, C07D 241/46

(54) **Verfahren zur Herstellung von 7,16-Dichlor-dianthrachinon-N,N'-dihydroazin**
Method of preparation of 7,16-dichloro-dianthraquinone-N,N'-dihydroazine
Procédé de préparation du 7,16-dichloro-dianthraquinone-N,N'-dihydroazine

(30) Priorität: 01.07.1992 DE 4221605
(43) Veröffentlichungstag der Anmeldung: 05.01.1994
(73) Patentinhaber: BASF Aktiengesellschaft, 67063 Ludwigshafen (DE)
(72) Erfinder: Schmitt, Michael, Dr., D-67549 Worms (DE); Niedenbrueck, Matthias, Dr., D-6703 Limburgerhof (DE)

(56) Entgegenhaltungen:
- DE-A- 3 422 385

## Beschreibung

Die vorliegende Erfindung betrifft ein neues Verfahren zur Herstellung von 7,16-Dichlor-dianthrachinon-N,N'-dihydroazin (I) 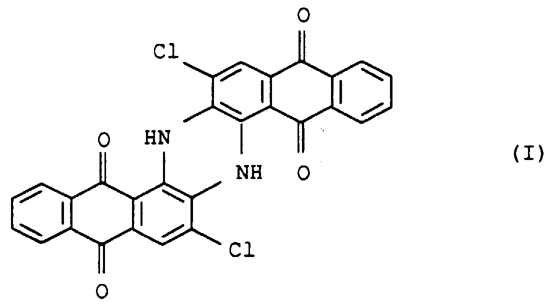 7,16-Dichlor-dianthrachinon-N,N'-dihydroazin (I), das auch als 3,3'-Dichlorindanthron bezeichnet wird, entspricht dem wichtigen Küpenfarbstoff C.I. Vat Blue 6.

Die bislang bekannten Verfahren zur Herstellung von Dichlorindanthron (I) gehen entweder von 2- oder 1-Aminoanthrachinon aus, das in Gegenwart eines alkalischen Kondensationshilfsmittels und eines Oxidationsmittels zunächst zum unsubstituierten Indanthron kondensiert wird. Wie in der DE-A-34 22 385 und der älteren Patentanmeldung EP-A-572 854 beschrieben, wird bei der Kondensation von 1-Aminoanthrachinon vorteilhaft ein cyclisches Harnstoffderivat zugesetzt.

Das gewünschte Chlorindanthron wird dann in einem zweiten Reaktionsschritt durch Chlorierung des Indanthrons erhalten, was vorwiegend in Schwefelsäure erfolgt (s. Venkataraman, "The Chemistry of Synthetic Dyes", Vol. II, S. 939 (1952). Dabei wird das Indanthron gleichzeitig zum Azin oxidiert, das anschließend mit Reduktionsmitteln wie Aluminumpulver oder Eisen(II)salzen wieder zum Dihydroazin reduziert werden muß. Außerdem werden in der Regel Gemische aus einfach, zweifach und dreifach chloriertem Indanthron erhalten, eine selektive Chlorierung in 3,3'-Position ist nicht möglich. Insbesondere bei höherem Gehalt an dreifach chloriertem Produkt resultieren dann grünere und trübere Farbtöne.

Der Erfindung lag daher die Aufgabe zugrunde, diesen Mängeln abzuhelfen und 3,3'-Dichlorindanthron in guten Reinheiten und guten Ausbeuten in einfacher und damit wirtschaftlicher Weise zugänglich zu machen.

Demgemäß wurde ein Verfahren zur Herstellung von 7,16-Dichlor-dianthrachinon-N,N'-dihydroazin (I) 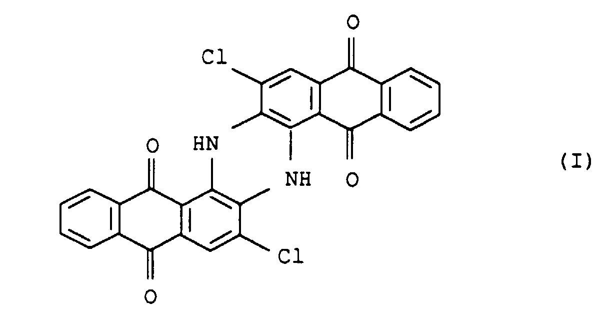 gefunden, welches dadurch gekennzeichnet ist, daß man 1-Amino-3-chloranthrachinon (II) in Gegenwart eines alkalischen Kondensationshilfsmittels, eines Oxidationsmittels und eines Harnstoffderivates der Formel (III) 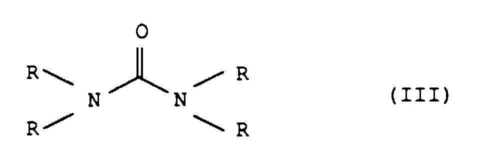 in der die Reste R gleiche oder verschiedene Alkylgruppen mit 1 bis 4 C-Atomen bedeuten, die auch unter Ausbildung eines die Harnstoffgruppierung enthaltenden 5- oder 6-gliedrigen Ringes miteinander verbunden sein können, kondensiert.

Das Ausgangsprodukt 1-Amino-3-chloranthrachinon (II) ist bekannt und läßt sich beispielsweise durch Hofmann-Abbau von 3-Chloranthrachinon-1-carbonsäureamid herstellen (DE-A-22 22 857).

Das erfindungsgemäße Verfahren kann unter den für die Kondensation von Aminoanthrachinonen zum Indanthron bekannten und beispielsweise in der DE-A-34 22 385 oder der älteren Patentanmeldung EP-A-572 854 beschriebenen Verfahrensbedingungen durchgeführt werden.

Wesentlich ist dabei die Anwesenheit eines Harnstoffderivats der Formel (III). Neben den durch 4 gleiche oder verschiedene C₁-C₄-Alkylgruppen R substituierten Harnstoffen, wie Tetramethyl-, Tetraethyl,- Tetra-n-propyl-, Tetra-n-butyl- und Dimethyldiethylharnstoff, sind vor allem cyclische Harnstoffderivate geeignet, bei denen 2 der Reste R unter Ausbildung eines 5- oder 6-gliedrigen Ringes miteinander zu Ethylen- bzw. Propylenharnstoffen verbunden sind. Bevorzugt sind hier z.B. N,N'-Diethyl- und N,N'-Di-n-propylethylenharnstoff und N,N'-Diethyl- und N,N'-Di-n-propyl-propylenharnstoff, besonders N,N'-Dimethylethylenharnstoff und ganz besonders N,N'-Dimethylpropylenharnstoff.

Der Harnstoff (III) wird in der Regel in Mengen von 0,05 bis 10 Gew.-Teilen, bevorzugt 0,1 bis 5 Gew.-Teilen, besonders bevorzugt 1 bis 3 Gew.-Teilen pro Gew.-Teil 1-Amino-3-chloranthrachinon (II) eingesetzt, gewünschtenfalls als Mischung mit einem inerten, organischen Lösungsmittel wie Dimethylsulfoxid, Pyridin, Toluol oder Xylol. Als alkalische Kondensationshilfsmittel können die üblicherweise für diesen Zweck verwendeten Basen wie Natriumhydroxid und insbesondere Kaliumhydroxid zum Einsatz kommen. Es kann als Feststoff oder bevorzugt als wäßrige Lösung, vorzugsweise 50 gew.-%ig, eingesetzt werden. Die verwendete Menge beträgt im allgemeinen 0,1 bis 10 Gew.-Teile, bevorzugt 0,2 bis 2,5 Gew.-Teile pro Gew.-Teil (II).

Als Oxidationsmittel eignen sich Luft, Sauerstoff, peroxidische Salze wie Perborate, Nitrate und Chlorate. Besonders günstig sind Luft oder Sauerstoff.

In einigen Fällen kann es von Vorteil sein, dem Reaktionsmedium ein Netzmittel zuzugeben, das unter den Reaktionsbedingungen nicht reagiert, z.B. Naphthalin- oder Alkylnaphthalinsulfonate oder sulfuriertes Oleinamid.

Die Reaktionstemperatur beträgt beim erfindungsgemäßen Verfahren in der Regel 80 bis 150°C und hängt von der Menge an N,N'-Dimethylpropylenharnstoff ab.

Verfahrenstechnisch geht man zweckmäßigerweise so vor, daß man eine Mischung aus 1-Amino-3-chloranthrachinon (II) und Harnstoffderivat vorlegt, auf etwa 90 bis 100°C erhitzt und dann das Kondensationshilfsmittel zugibt, wobei man Luft (etwa 200 bis 300 ml/min) durch das Reaktionsgemisch leitet. Nach beendeter Zugabe erhöht man die Temperatur vorzugsweise auf 120 bis 130°C, wobei ein Teil des Wassers abdestilliert.

Die Reaktion dauert im allgemeinen 4 bis 12 h. Das Ende der Umsetzung läßt sich in üblicher Weise durch Dünnschichtchromatographie bestimmen.

Die Aufarbeitung des Reaktionsgemisches auf das Chlorindanthron (I) kann in bekannter Weise durch Ausfällen mit Wasser und Abfiltrieren vorgenommen werden.

N,N'-Dimethylpropylenharnstoff kann vorteilhaft durch Destillation oder Lösungsmittelextraktion aus der wäßrigen Phase zurückgewonnen und für weitere Umsetzungen eingesetzt werden.

Anschließend wird das Produkt (I) in der Regel einer üblichen reinigenden Nachbehandlung unterzogen. Dazu wird es zweckmäßigerweise zunächst in Wasser aufgeschlämmt und mit einem Reduktionsmittel wie Natriumdithionit, Thioharnstoffdioxid, Hydroxyaceton oder Glucose in Gegenwart einer Base wie Natriumhydroxid zur Leukoform reduziert. Deren Natriumsalz kann dann wieder abfiltriert, mit Wasser gewaschen und an der Luft erneut zum Chlorindanthron (I) oxidiert werden.

Mit Hilfe des erfindungsgemäßen Verfahrens kann 7,16-Dichlor-dianthrachinon-N,N'-dihydroazin (3,3'-Dichlorindanthron; (I)) in sehr guter Ausbeute und hoher Reinheit hergestellt werden, so daß Blaufärbungen mit hoher Farbtonreinheit und Brillanz erzielt werden können. Von besonderem Vorteil ist, daß die Synthese des Chlorindanthrons (I) gegenüber den bekannten, zweistufigen Verfahren wesentlich vereinfacht wird und das in 3,3'-Stellung chlorierte Indanthron gezielt erhalten wird.

Setzt man beim erfindungsgemäßen Verfahren ein Gemisch aus 1-Amino-3-chloranthrachinon und nicht chloriertem 1-Amino-anthrachinon als Ausgangsprodukt ein, dann können vorteilhaft auch Chlorindanthrone mit niedrigeren Chlorierungsgraden erhalten werden, ohne Gefahr zu laufen, gleichzeitig auch höher chlorierte Indanthrone zu erzeugen.

### Beispiel

Eine Mischung aus 172,6 g 1-Amino-3-chloranthrachinon und 230 g (220 ml) N,N'-Dimethylpropylenharnstoff wurde auf 95 bis 100°C erhitzt. Unter Hindurchleiten eines Luftstroms von 300 ml/min wurden dann 141 g einer 50 gew.-%igen Kalilauge in 3 h zugetropft. Anschließend wurde die Temperatur für 8 h auf 125 bis 130°C erhöht und ein Teil des Wassers abdestilliert. Das Ende der Umsetzung wurde dünnschichtchromatographisch (Abwesenheit von 1-Amino-3-chloranthrachinon) bestimmt.

Das Produkt (I) wurde durch Eintragen der Reaktionsmischung in 800 ml Wasser ausgefällt, abfiltriert und gewaschen.

Zur Reinigung wurde das Filtergut in eine Lösung von 152 g Natriumhydroxid in 4 900 ml Wasser eingerührt. Nach Zugabe von 83 g Natriumdithionit bei 60°C wurde die Mischung noch 20 min gerührt. Bei einer Temperatur von 50°C wurde das ausgefallene Natriumsalz des Leukochlorindanthrons abfiltriert, gewaschen und an der Luft oxidiert.

Es wurden 137 g 3,3'-Dichlorindanthron (I) mit einem Chlorgehalt von 13,4 Gew.-% (ber. 13,8 Gew.-%) erhalten, was einer Ausbeute von 80 % entspricht.

## Patentansprüche

1. Verfahren zur Herstellung von 7,16-Dichlor-dianthrachinon-N,N'-dihydroazin (I) 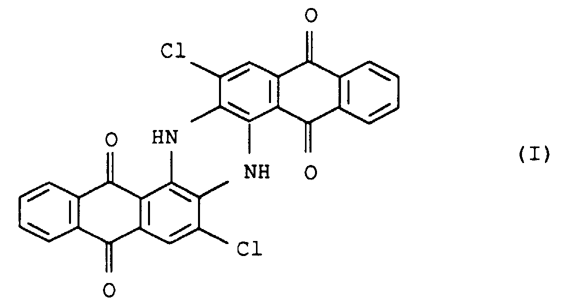 dadurch gekennzeichnet, daß man 1-Amino-3-chloranthrachinon (II) in Gegenwart eines alkalischen Kondensationshilfsmittels, eines Oxidationsmittels und eines Harnstoffderivates der Formel (III) 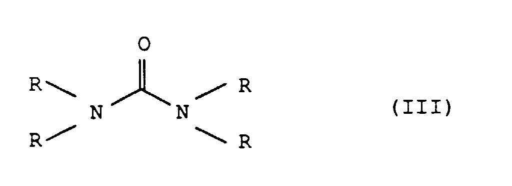 in der die Reste R gleiche oder verschiedene Alkylgruppen mit 1 bis 4 C-Atomen bedeuten, die auch unter Ausbildung eines die Harnstoffgruppierung enthaltenden 5- oder 6-gliedrigen Ringes miteinander verbunden sein können, kondensiert.

2. Verfahren nach Anspruch 1, dadurch gekennzeichnet, daß man ein cyclisches Harnstoffderivat einsetzt.

3. Verfahren nach Anspruch 1 oder 2, dadurch gekennzeichnet, daß man als Harnstoffderivat N,N'-Dimethylpropylenharnstoff verwendet.

4. Verfahren nach den Ansprüchen 1 oder 3, dadurch gekennzeichnet, daß man die Kondensation bei 80 bis 150°C durchführt.

## Claims

1. A process for preparing 7,16-dichlorodianthraquinone-N,N'-dihydroazine (I) 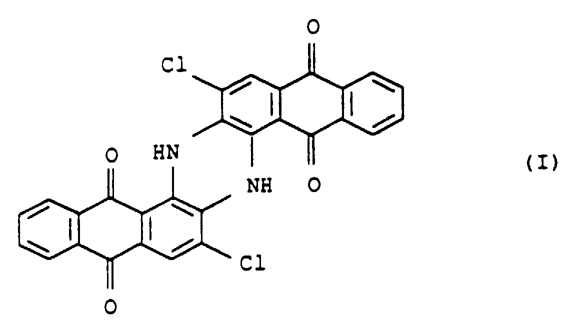 which comprises condensing 1-amino-3-chloroanthraquinone (II) in the presence of an alkaline condensing aid, of an oxidizing agent and of a urea derivative of the formula (III) 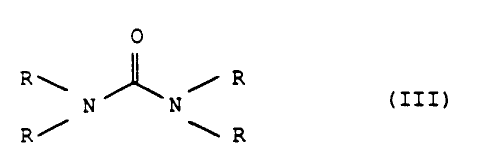 where the radicals R are identical or different alkyl groups of from 1 to 4 carbon atoms, which may also be joined together to form a 5- or 6-membered ring that contains the urea group.

2. A process as claimed in claim 1, wherein a cyclic urea derivative is used.

3. A process as claimed in claim 1 or 2, wherein the urea derivative used is N,N'-dimethylpropyleneurea.

4. A process as claimed in claim 1 or 3, wherein the condensation is carried out at from 80 to 150°C.

## Revendications

1. Procédé de préparation de 7,16-dichlorodianthraquinone-N,N'-dihydro-azine (I) 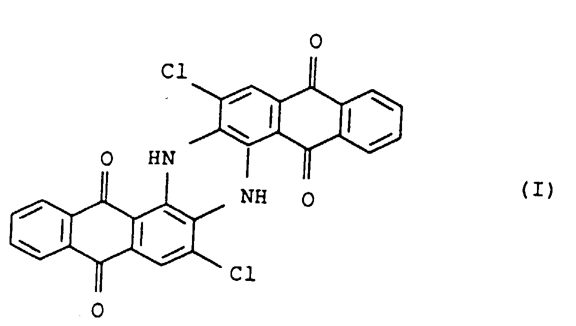 caractérisé en ce que l'on condense de la 1-amino-3-chloroanthraquinone (II) en présence d'un adjuvant de condensation alcalin, d'un oxydant et d'un dérivé d'urée de formule (III) 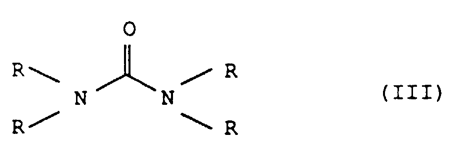 dans laquelle les restes R représentent des groupements alkyle à 1-4 atomes de carbone identiques ou différents qui peuvent être reliés entre eux en formant un cycle à 5 ou 6 chaînons contenant le groupement urée.

2. Procédé selon la revendication 1, caractérisé en ce que l'on utilise un dérivé cyclique d'urée.

3. Procédé selon la revendication 1 ou 2, caractérisé en ce que l'on utilise, comme dérivé d'urée, de la N,N'-diméthylpropylène-urée.

4. Procédé selon la revendication 1 ou 3, caractérisé en ce que l'on conduit la condensation à une température de 80 à 150°C.
